# EUROPEAN PATENT SPECIFICATION

(11) **EP 1 817 758 B1**
(45) Date of publication and mention of the grant of the patent: **20.01.2016**
(21) Application number: 05849493.1
(22) Date of filing: 22.11.2005
(51) Int. Cl.: G06Q 10/08, G06Q 20/20, G06Q 40/00

(54) **SYSTEM AND METHOD FOR INTEGRATING POINT OF SALE AND ELECTRONIC ARTICLE SURVEILLANCE DATA**
SYSTEM UND VERFAHREN ZUR INTEGRIERUNG VON VERKAUFSORT- UND ELEKTRONISCHEN ARTIKELÜBERWACHUNGSDATEN
SYSTEME ET PROCEDE D'INTEGRATION DE DONNEES DE SURVEILLANCE ELECTRONIQUE D'ARTICLES A DES POINTS DE VENTE

(30) Priority: 24.11.2004 US 630939 P
(43) Date of publication of application: 15.08.2007
(73) Proprietor: Tyco Fire & Security GmbH, 8212 Neuhausen am Rheinfall (CH)
(72) Inventor: BURKHOLDER, William, Karl, Tamarac, Florida 33321 (US); WATKINS, Harry, Boca Raton, Florida 33498 (US); RIDER, William, Matthew, Port Saint Lucie, Florida 34953 (US); FALLIN, David, Buchanan, Coral Springs, Florida 33071 (US)
(74) Representative: Wright, Howard Hugh Burnby
(86) International application number: PCT/US2005/042478
(87) International publication number: WO 2006/058086

(56) References cited:
- WO-A-2004/077372

## Description

### Background

### 1. Field of the Invention

Embodiments of the invention relate to point of sale (hereinafter "POS") and electronic article surveillance (hereinafter "EAS") systems and more specifically to a system and method for integrating data from POS and EAS systems by utilizing an alarm management unit.

### 2. Description of the Relevant Art

Current retail establishments utilize a plurality of electronic equipment within their outlets. Most important of these include a point of sale system and an electronic article surveillance system. POS systems perform retail transactions and include POS stations, such as cash registers, scanners, etc., and other equipment interconnected in a POS network. The POS stations, inter alia, identify merchandise, change inventory figures, (e.g., merchandise's price, quantity, sale reductions, etc.), and receive payment.

EAS systems are detection systems that are configured to identify one or more of an EAS tags within a given detection region. EAS systems have many uses, but most often they are used as security systems for preventing shoplifting in stores. EAS systems are readily configurable for a variety of different purposes and typically are configured to make use of a number of different technologies.

A typical EAS system includes an electronic detection unit, EAS tags, and a deactivator. Deactivation is commonly known to either deactivate tags attached or embedded in merchandise or detach tags from merchandise. The detection units form an EAS tag detection region and are usually placed in high traffic areas, such as entrances and exits of stores. The EAS tags have special characteristics and are specifically designed to be affixed to or embedded in merchandise or other objects sought to be protected. When an active EAS tag passes through the EAS tag detection region, the EAS system sounds an alarm, e.g., audio and/or visual alarm, to indicate the removal of the EAS tag from the proscribed area.

Therefore, in order for a customer to leave with the purchased merchandise, the EAS tag attached thereto must be deactivated either by magnetically deactivating the tag or detaching the tag from the merchandise. Typically, EAS deactivators disable EAS tags mechanically or electronically and deactivation is accomplished during the retail transaction at the POS station. The EAS deactivator is connected to the POS station, which signals the EAS deactivator to disable the EAS tag once the merchandise has been paid for, allowing the merchandise to be removed from the store. Hence, during a retail transaction, both the POS transaction and the EAS deactivation in effect occur at the POS station. As a result, the POS station is involved in bidirectional communications with one or more EAS deactivators. In one direction, from POS station to the EAS deactivator, the POS station sends deactivation commands which are then forwarded to the EAS system to disable the EAS tag. In the opposite direction, from the EAS deactivator to the POS station, the EAS deactivator sends data concerning which and/or how many EAS tags have just been deactivated. Subsequently, the POS station network must also process and transport, both, the EAS deactivation data and the POS transaction data.

This conventional arrangement drains extensive processing resources from the POS systems. In addition, this arrangement complicates the installation and modification of POS systems (e.g., networking equipment). Furthermore, the EAS deactivation data is processed separately from the POS transaction data, without correlating the two sources of information. Therefore, there is a need for a system which would alleviate the burden typically placed on the POS stations and networks which are routinely required to process the bidirectional POS and EAS data. Ideally, such a system would be configured to remove or modify bidirectional communication between the POS stations the EAS deactivators. The system would also correlate the two types of data to provide important statistical analysis for management concerns.

In one particular useful embodiment, the present invention relates to a system for integrating information concerning point of sale (POS) transactions and electronic article surveillance (EAS) deactivations. The system includes a POS station configured to collect and transmit purchase data concerning purchased merchandise and a deactivation signal to disable EAS tag attached to the merchandise. The system also includes an EAS deactivator configured to receive the merchandise data and a deactivation signal from the POS station. The EAS deactivator is also configured to deactivate the EAS tag, collect data pertaining to deactivation of the EAS tag, and transmit the data pertaining to merchandise and deactivation. Also included, is an alarm management unit configured to receive, process and relay the purchase and deactivation data to a data processing unit, which analyzes the data and generates a report based on the data.

WO2004/077372 discloses an integrated electronic article surveillance (EAS) and point of sale (POS) system and method in which POS data and EAS alarm event data are compared. In this system, bidirectional communication is required between the POS station and the EAS deactivator.

### Summary

In order to solve the problems associated with the prior art, the present invention provides a method for integrating information concerning point of sale (POS) transactions and electronic article surveillance (EAS) deactivations, the method comprises the steps of generating POS data by a POS station; transmitting deactivation signals from the POS station to an EAS deactivation device; generating EAS deactivation data by the EAS deactivation device; transmitting the EAS deactivation data and the POS data to an alarm management unit; and correlating the EAS deactivation data with the POS data to determine the effectiveness of a system comprising the POS station and the ESA deactivation device.

The present invention also provides a system for integrating information concerning point of sale (POS) transactions and electronic article surveillance (EAS) deactivations, the system comprises a POS station arranged to generate POS data; an EAS deactivation device for receiving deactivation signals from the POS station and generating EAS deactivation data; an alarm management unit configured for receiving the EAS deactivation data and the POS data, data processing unit arranged to correlate the POS data and the EAS deactivation data to determine the effectiveness of a system comprising the POS station and the EAS deactivation device.

Other aspects of the invention are set out in the accompanying claims.

### Brief Description of the Drawings

Various embodiments of a system and method for data logging of EAS tags are described herein with reference to the drawings wherein:
Fig. 1 is a schematic block diagram of a system for integrating POS and EAS data;
Fig. 2 is an exemplary computing system for implementing the present disclosure;
Fig. 3 is a schematic block diagram of integrated POS and EAS data flow; and
Fig. 4 is a flow diagram showing a method for integrating POS and EAS data.

### Detailed Description

Preferred embodiments of the present disclosure will be described hereinbelow with reference to the accompanying drawings. In the following description, well-known functions or constructions are not described in detail to avoid obscuring the present disclosure in unnecessary detail.

A system and method for integrating POS transaction and EAS deactivation data is disclosed. In general, the herein disclosed system and method relate to POS station which processes merchandise and collects and stores related POS data. The data may include information relating to particular merchandise or whether the tag is present or absent from the merchandise. The POS station, in turn, transmits the POS data and deactivation signals to an EAS deactivator which disables EAS tags and relays POS data as well as EAS deactivation data to an alarm management unit. The alarm management unit thereafter transmits the data to a data processing unit for data integration and correlation.

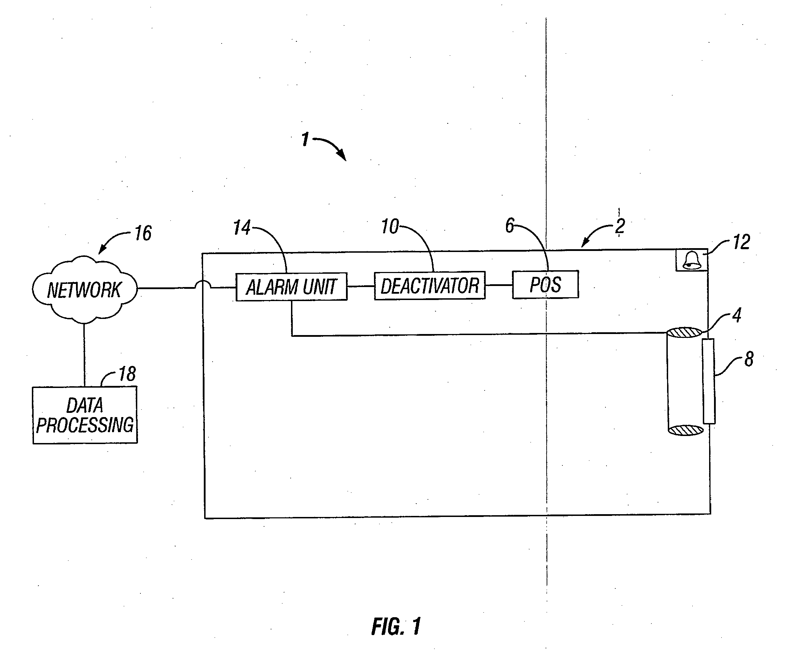

More particularly and with specific reference to the figures, Fig. 1 shows a data integration system 1 for collecting EAS deactivation and POS transaction data. System 1 is typically deployed in a retail environment, e.g., a department store 2. Those skilled in the art will understand that the system 1 may be deployed in a plurality of settings where EAS systems and POS systems are usually installed. The store 2 may include a plurality of departments, e.g., men's apparel, women's apparel, electronics, etc. In addition, those departments may be subdivided into predetermined areas, e.g., shoes, fitting rooms, active wear, isles, etc. EAS tags are typically affixed to or embedded in the store's merchandise and/or the merchandise's packaging in order to prevent shoplifting. Those skilled in the art will appreciate that the EAS tags may be any EAS anti-theft device, such as a label or other more sophisticated devices having an outer casing and a plurality of metallic strips.

EAS systems typically operate using a transmitter and a receiver wherein the transmitter is placed on one side of the detection region and the receiver is placed on the opposite side of the detection region. In the case of a retail store, this detection region is usually defined at a checkout aisle or an exit. When an EAS tag enters the detection region, the EAS tag has a characteristic response to an exciter signal which is readily detectable. For example, the EAS tag may respond to the signal sent by the transmitter by using a simple semiconductor junction, a tuned circuit composed of an inductor and capacitor, soft magnetic strips or wires, or vibrating resonators. This characteristic response is subsequently detected by the receiver.

The system 1 also includes a detection unit 4, a point-of-sale ("POS") station 6, an EAS deactivator 10, an alarm management unit 14, and an alarm 12. The detection unit 4 includes a transmitter and a receiver which defines a predetermined EAS tag detection region. The detection region is preferably located around or in proximity to an exit 8 since placing the detection unit 4 in a high-traffic area increases the chances of detecting shoplifted merchandise. The transmitter is configured to produces a predetermined exciter signal in the detection region. As a result, an active EAS tag (e.g., a non-deactivated or non-defeated EAS tag) passing through the detection region responds to the exciter signal which is recognized by the detection unit 4. In that event, the detection unit 4 sends a signal to the alarm 12 which generates an alarm, e.g., audio and/or visual alarm.

POS station 6 may be any device adapted for performing POS transactions, e.g., a cash register and may include a display, a keypad, a printer for printing receipts, and/or a scanner for reading UPC codes. POS station 6 is typically connected to the EAS deactivator 10 in order to disable or defeat EAS tags attached to the merchandise.

More particularly, merchandise can only be removed from the store 2 if the EAS tags, which are usually attached to the merchandise or the packaging, are deactivated or defeated. The EAS deactivator 10 is typically located near or at the POS station 6 so that EAS tag deactivation occurs concurrently with the merchandise sale transaction. During the retail transaction, POS station 6 is configured to check out the merchandise, receive payment, and signal the EAS deactivator 10 to deactivate the EAS tag. Deactivation may be accomplished using any number of methods, such as physical removal of the EAS tag from the merchandise (e.g., an EAS tag attached to apparel) or electronic deactivation of the EAS tag, so that the EAS tag remains on the merchandise but will not respond to the exciter signal

(e.g., an EAS tag attached within a DVD case). It is also envisioned that the EAS deactivator 10 may operate in a variety of modes. For instance, in a default mode the EAS deactivator 10 may be constantly on, where any EAS tags brought within the operational range thereof are deactivated. In another mode, the EAS deactivator 10 may be turned on to deactivate EAS tags only when required by the commands from the POS station 6, while remaining in standby mode for the remainder of the time.

The EAS deactivator 10 disables the EAS tag upon receiving the signal from the POS station 6. In prior art systems, the EAS deactivator 10 transmits deactivation data (e.g., which tags have been deactivated) to the POS station 6. In the present disclosure, the EAS deactivator 10 transmits the deactivation data to the alarm unit 14, which is also configured to receive POS transaction data from POS station 6 via EAS deactivator 10 or detacher. As can be appreciated by the present disclosure, this eliminates bidirectional communications between the EAS deactivator 10 and the POS station 6.

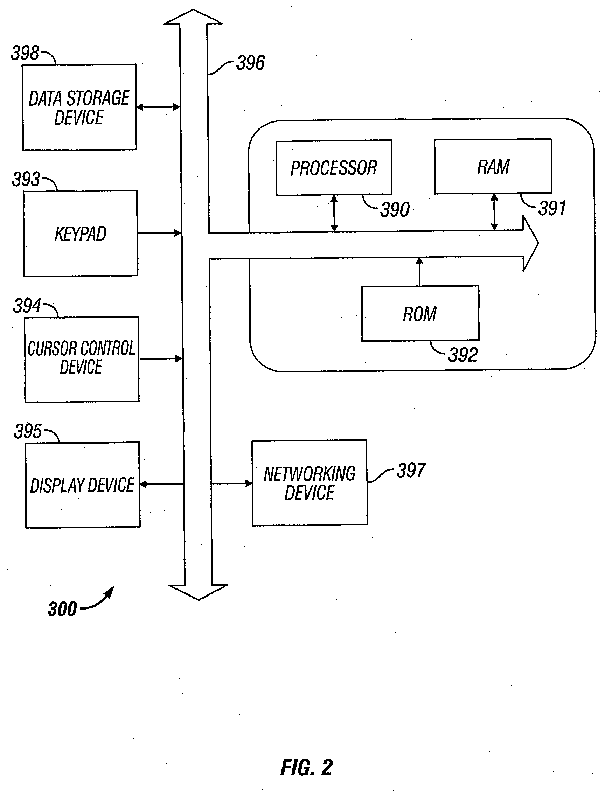

The alarm unit 14, in addition to collecting EAS deactivation data and the POS transaction data, may be a terminal which controls the EAS system as well as safety equipment in the store 2 (e.g., fire alarm, anti-theft alarm, etc.). The alarm unit 14 may also be configured as a data terminal or a computing device 300 as shown in Fig. 2. It is to be understood that the present disclosure may be implemented in various forms of hardware, software, firmware, special purpose processors, or a combination thereof. In one embodiment, the present disclosure may be implemented in software or firmware as an application program tangibly embodied on the computing device 300.

The computing device 300 may include one or more central processing units (CPU) 390, a random access memory (RAM) 391, a read only memory (ROM) 392 and input/output (I/O) interface(s) such as a keypad 393, cursor control device 394 (e.g., a mouse, touchscreen, etc.), a data storage device 398, and display device 395. Furthermore, the computing device 300 may also include a networking device 397 which provides wired or wireless connectivity to the network 16. In addition, various other peripheral devices may be connected to the computing device 300 by various interfaces and bus structures, such as a parallel port, serial port or universal serial bus (USB) or wireless. A system bus 396 may be included which couples the various components and may be any of several types of bus structures including a memory bus or memory controller, a peripheral bus, and a local bus using any of a variety of different bus architectures.

The computing device 300 may also be configured to include an operating system and micro instruction code. The various processes and functions described herein may either be part of the micro instruction code, firmware, or part of the application program (or a combination thereof) which is executed via the operating system. In addition, the computing device 300 may be designed to include software for displaying user input screens and recording user responses as discussed in more detail below.

It is to be further understood that because some of the constituent system components and method steps depicted in the accompanying figures may be implemented in software, the actual connections between the system components (or the process steps) may differ depending upon the manner in which the present disclosure is programmed. Given the teachings of the present disclosure provided herein, one of ordinary skill in the related art will be able to contemplate these and similar implementations or configurations of the present disclosure. The data logging method of the present disclosure may be used at several levels, including the operating system, the application level, or by the application components.

The alarm unit 14 is contemplated to connect to a communications network 16 which allows the alarm unit 14 to transmit the collected POS transaction and EAS deactivation data to a data processing unit 18. Those skilled in the art will appreciate that POS station 6, EAS deactivator 10, and alarm unit 14 may be interconnected in a variety of ways, using wired and/or wireless interfaces. This allows for the interconnected devices to communicate with each other and share data.

The network 16 may be a local area network (LAN), wide area network (WAN), the Internet and/or any known network that couples a plurality of computing devices to enable various modes of communication via network messages. For example, the network 16 may be a corporate intranet including a single server and multiple personal computers housed within a single facility, or alternatively, multiple servers with multiple personal computers located in different geographic locations.

The data processing unit 18 may be a central server which is part of a data storage facility for the store 2. In this instance, the data processing unit 18 would be configured to process the POS transaction and EAS deactivation data from alarm unit 14 and compile the data in a predetermined format. In addition, the data processing unit 18 may be configured to have access to other types of data related to the store 2, (e.g., store occupancy, POS transactions, EAS tag deactivations, etc.) typically obtained from the POS station 6 or other devices connected to the network 16. The data processing unit 18 may combine such information with the data received from the alarm unit 14 to generate reports concerning shoplifting trends in the store 2 as discussed in more detail below.

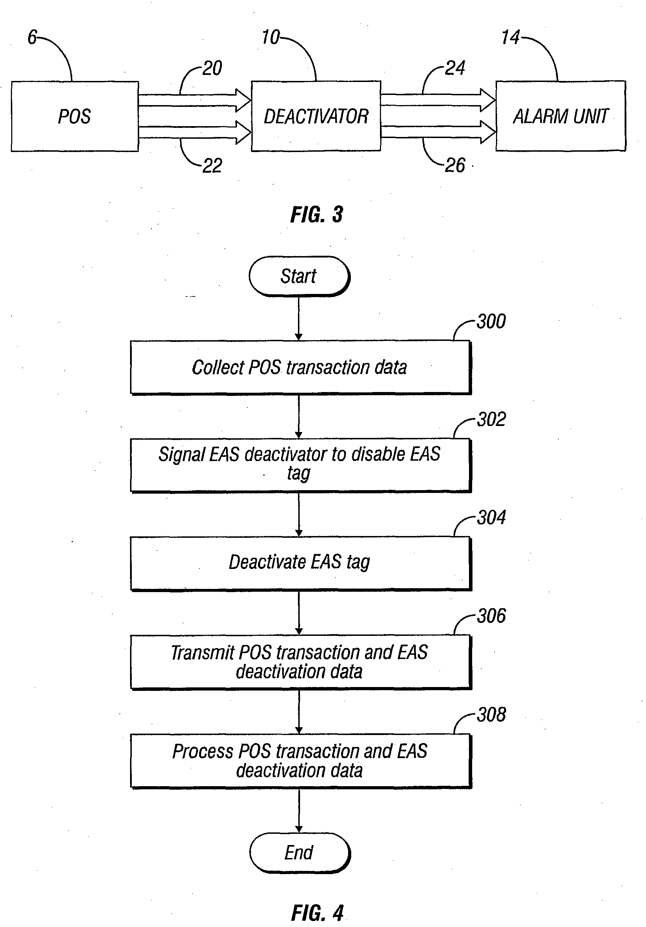

Fig. 3 shows a schematic block diagram of integrated POS and EAS data flow (also discussed in conjunction with Fig. 4) showing one particularly useful method for integrating POS and EAS data. More particularly, in step 300, a POS transaction occurs at the POS station 6. This transaction typically involves identifying the merchandise (e.g., scanning UPC code via attached scanner, inputting identifying information manually, etc.) in order to obtain the merchandise's pricing information, receiving payment (e.g., cash, credit card, bank check, etc.), as well as collecting and storing POS transaction data which includes payment information, any discounts or surcharges, as well as customer identity, cashier identity, etc. The POS transaction data is time stamped (e.g., with date and time of the transaction) and transmitted to the EAS deactivator 10 as represented by a data stream 20.

In step 302, the POS station 6 signals the EAS deactivator 10 to disable the EAS tag attached to the merchandise (if present). The deactivation signals are shown in a data stream 22. The data stream 22 includes the identity of the merchandise that was purchased in step 300, this allows the EAS deactivator 10 to disable any EAS tags associated with the merchandise.

In step 304, the EAS deactivator 10 deactivates any EAS tags found on the merchandise. This may be accomplished by contacting the detector 4 or a centralized EAS system computer (not shown) which may include a data base listing the EAS tag and detector 4 with which the EAS tag is registered. In conventional POS and EAS systems, POS station 6 and the EAS deactivator 10 are involved in bidirectional communication. After the deactivation, the EAS deactivator 10 transmits the deactivation data which includes the presence of an EAS tag, the deactivations performed, etc. back to the POS station 6, which would then compile the EAS deactivation data with the POS transaction data. As can be appreciated, this bidirectional communication tends to slow down and burden the POS system.

In according with the present disclosure, in step 306 the EAS deactivator 10 transmits the POS transaction data in a data stream 24 and the EAS deactivation data in a data stream 26 to the alarm unit 14, thereby eliminating the need for bidirectional communication. Those skilled in the art will appreciate that the POS station 6 may transmit POS transaction data directly to the alarm unit 14, which also eliminates the bidirectional communications between the POS station 6 and the EAS deactivator 10.

In step 306, the alarm unit 14 stores and forwards the POS transaction and EAS deactivation data to the data processing unit 18 through the network 16. The data processing unit 18 includes a database utilized by a data-mining package, which in step 308, correlates the number of merchandise items processed at the POS station 6 with the number of deactivations processed by the EAS deactivator 10. The correlated data may include, for example, the following information, a cashier with an ID code 4321, logged into register No. 123, started transaction 0001, scanned item 12345678 on 05/10/05 at 10:25:42, two EAS deactivations occurred, ended the transaction 0000. Since this information consists of text characters, it may all be stored in a string where a delimiting character, such as a comma is used denote different data fields (e.g., 4321,0123,0001,12345678,05102005,102542,002,0000). Those skilled in the art will appreciate that other data structures may be used depending on the type of data collected.

The correlated information may also be used for tag compliance reports, effectiveness of cashier personnel in POS transactions. Those skilled in the art will appreciate that data processing may be accomplished at the alarm unit 14 and that the data processing unit 18 is described in the present disclosure to illustrate the different stages of the method.

In determining tag compliance, the data processing unit 18 would compare the number of EAS tags that have POS station 6 attempted to deactivate with the number of EAS tags actually disabled by the EAS deactivator 10. If the numbers are not the same, it denotes that either an insufficient or extraneous number of disablements occurred. If there were an insufficient number of deactivations, the store 2 is indirectly affected, since the active EAS tags which were not properly deactivated would trigger an alarm causing unnecessary embarrassment and delay to the consumers when they would attempt to leave the store 2. This may reflect poorly on the image of the store 2. Conversely, if there were too many deactivations, then the EAS tags which were improperly deactivated, would allow for merchandise containing them to be removed from the store 2 without triggering the alarm 12. Such errors may be the result of human error (e.g., the cashier operating the POS station 6 improperly deactivates the EAS tag). This results in more direct harm to the store 2 since that merchandise can be easily stolen. Correlating EAS deactivation and POS transaction data allows the managers of the store 2 to measure performance of sales personnel and take appropriate action (e.g., provide more training, transfer, termination, etc.).

By enabling the EAS deactivator 10 to function as one of or as the only data collection source, many additional benefits become readily available to the owner of the store 2, suppliers, and equipment manufacturers. More specifically, correlation of deactivation data with the scanning data provides a variety of valuable analytical tools.

The system allows for verification of tag compliance for retailers as well as manufacturers. For example, if all of a manufacturer's merchandise is tagged when it is supplied to a retail establishment, the system can correlate deactivation with POS information to determine the percentage of manufacturer's goods which are mistagged (e.g., label positioned too far from bar code). Moreover, employee misconduct is readily identifiable with the presently proposed system. For instance, internal theft by sales personnel can be identified by comparing the number of POS scans with the number of EAS deactivations. The system or the resulting data gathered therefrom may also be used to identify items which are improperly tagged or labeled (e.g., label positioned too far from bar code).

Integrity of the EAS deactivator(s) or the POS terminals(s) may also be readily identified as part of the presently disclosed methods or systems. For example, if the number of deactivations is significantly lower or higher than the number of scans, the cause of the discrepancy may be attributable to malfunctioning deactivating equipment.

The invention according to the present disclosure integrates the POS transaction and EAS deactivation data which allows for correlation of relevant information to determine the effectiveness of the personnel and/or equipment. Furthermore, the integration eliminates the need for bidirectional communication between the POS station and the EAS system wherein allows for more effective data processing and increased data throughput.

While several embodiments of the disclosure have been shown in the drawings, it is not intended that the disclosure be limited thereto, as it is intended that the disclosure be as broad in scope as the art will allow and that the specification be read likewise. Therefore, the above description should not be construed as limiting, but merely as exemplifications of preferred embodiments. Those skilled in the art will envision other modifications.

## Claims

1. A method for integrating information concerning point of sale (POS) transactions and electronic article surveillance (EAS) deactivations, the method comprising the steps of:
generating (300) POS data by a POS station (6);
transmitting (302) deactivation signals from the POS station (6) to an EAS deactivation device (10);
generating (304) EAS deactivation data by the EAS deactivation device (10);
transmitting (306) the EAS deactivation data and the POS data to an alarm management unit (14); and
correlating (308) the EAS deactivation data with the POS data to determine the effectiveness of a system comprising the POS station and the ESA deactivation device (10).

2. The method as claimed in claim 1 further comprising the steps of generating additional data at the alarm management unit (14) and combining the additional data with the POS data and the EAS deactivation data at the alarm management unit (14).

3. A method as claimed in claim 1 or claim 2, wherein the step of correlating the data with the additional data determines at least one of effectiveness of employees, effectiveness of equipment, placement of EAS tags, and functionality of EAS tags.

4. A system for integrating information concerning point of sale (POS) transactions and electronic article surveillance (EAS) deactivations, the system comprising:
a POS station (6) arranged to generate POS data;
an EAS deactivation device (10) for receiving deactivation signals from the POS station (6) and generating EAS deactivation data;
an alarm management unit (14) configured for receiving the EAS deactivation data and the POS data
data processing unit (18; 14) arranged to correlate the POS data and the EAS deactivation data to determine the effectiveness of a system comprising the POS station and the EAS deactivation device (10).

5. The system as claimed in claim 4 wherein the alarm management unit (14) generates additional data and combines this data with the POS data and the EAS deactivation data at the alarm management unit.

6. The system as claimed in claim 4 or claim 5 wherein;
the POS station (6) is configured to collect and transmit the POS data, wherein the POS data is first data pertaining to purchased merchandise and has data relating to EAS deactivation;
the EAS deactivation device (10) is configured to receive a deactivation signal or a default condition from the POS station, the EAS deactivation device also being configured to deactivate at least one EAS tag, collect said EAS deactivation data which is second data pertaining to deactivation of the at least one EAS tag, and transmit the first and second data;
the alarm management unit (14) is configured to receive, process and relay the first and second data; and
the data processing unit (18; 14) is configured to receive and process the first and second data, the data processing unit also being configured to analyse the first and second data and generate third data pertaining to the first and second data.

7. A system as claimed in claim 6, wherein the data processing unit (18; 14) is arranged to correlate the first data with the second data to determine at least one of effectiveness of employees, effectiveness of equipment, placement of EAS tags, and functionality of EAS tags.

8. A system as claimed in claim 6 or claim 7, wherein the data processing unit (18; 14) is arranged such that the third data correlates the first and second data to verify that a predetermined number of deactivations occurred.

9. A system as claimed in claim 6 or claim 7, wherein the data processing unit (18; 14) is arranged such that the third data correlates the first and second data to determine effectiveness of a user at the POS station (6).

10. A system as claimed in claim 6 or claim 7, wherein the data processing unit (18; 14) is arranged such that the third data correlates the first and second data to determine operability of the at least one EAS tag.

11. A system as claimed in any one of claims 6 to 10, wherein the first data includes identifying information concerning a cashier, the POS station (6), the user at the POS station and the purchased merchandise.

12. A system as claimed in any one of claims 6 to 11, wherein the data processing unit (18; 14) is arranged such that the third data correlates the first and second data to determine the possibility of internal theft.

13. A system as claimed in any one of claims 6 to 11, wherein the data processing unit (18; 14) is arranged such that the third data correlates the first and second data to determine tagging compliance.

14. A system as claimed in any one of claims 6 to 13, wherein the second data includes information relating to the number of deactivations occurred.

15. A system as claimed in any one of claims 6 to 11, wherein the data processing unit (18; 14) is arranged such that the third data correlates the first and second data to derive diagnosis of integrity of the EAS deactivator (10).

## Patentansprüche

1. Verfahren zum Integrieren von Informationen bezüglich Transaktionen an einem Verkaufspunkt (POS) und Deaktivierungen elektronischer Artikelsicherung (EAS), wobei das Verfahren die folgenden Schritte aufweist:
Erzeugen (300) von POS-Daten durch eine POS-Station (6);
Übertragen (302) von Deaktivierungssignalen von der POS-Station (6) zu einer EAS-Deaktivierungseinrichtung (10);
Erzeugen (304) von EAS-Deaktivierungsdaten durch die EAS-Deaktivierungseinrichtung (10);
Übertragen (306) der EAS-Deaktivierungsdaten und der POS-Daten an eine Alarmverwaltungseinheit (14); und
Korrelieren (308) der EAS-Deaktivierungsdaten mit den POS-Daten zum Bestimmen der Effektivität eines Systems, das die POS-Station und die ESA-Deaktivierungseinrichtung (10) aufweist.

2. Verfahren gemäß Anspruch 1 ferner die Schritte zum Erzeugen zusätzlicher Daten an der Alarmverwaltungseinheit (14) und Kombinieren der zusätzlichen Daten mit den POS-Daten und den EAS-Deaktivierungsdaten an der Alarmverwaltungseinheit (14) umfassend.

3. Verfahren gemäß Anspruch 1 oder 2, wobei der Schritt zum Korrelieren der Daten mit den zusätzlichen Daten Effektivität von Angestellten und/oder Effektivität von Anlagen und/oder Platzierung von EAS-Etiketten und/oder Funktionalität von EAS-Etiketten bestimmt.

4. System zum Integrieren von Informationen bezüglich Transaktionen an einem Verkaufspunkt (POS) und Deaktivierungen elektronischer Artikelsicherung (EAS), wobei das System aufweist:
eine POS-Station (6), die angeordnet ist, um POS-Daten zu erzeugen;
eine EAS-Deaktivierungseinrichtung (10) zum Empfangen von Deaktivierungssignalen von der POS-Station (6) und Erzeugen von EAS-Deaktivierungsdaten;
eine Alarmverwaltungseinheit (14), die konfiguriert ist, um die EAS-Deaktivierungsdaten und die POS-Daten zu empfangen;
eine Datenverarbeitungseinheit (18; 14), die angeordnet ist, um die POS-Daten und die EAS-Deaktivierungsdaten zu korrelieren, um die Effektivität eines Systems zu bestimmen, das die POS-Station und die EAS-Deaktivierungseinrichtung (10) aufweist.

5. System gemäß Anspruch 4, wobei die Alarmverwaltungseinheit (14) zusätzliche Daten erzeugt und diese Daten mit den POS-Daten und den EAS-Deaktivierungsdaten an der Alarmverwaltungseinheit kombiniert.

6. System gemäß Anspruch 4 oder 5, wobei:
die POS-Station (6) konfiguriert ist, um die POS-Daten zu sammeln und zu übertragen, wobei die POS-Daten erste Daten betreffend bezogener Ware sind und Daten bezüglich EAS-Deaktivierung aufweisen;
die EAS-Deaktivierungseinrichtung (10) konfiguriert ist, um ein Deaktivierungssignal oder eine Standardbedingung von der POS-Station zu empfangen, wobei die EAS-Deaktivierungseinrichtung ebenso konfiguriert ist, um mindestens ein EAS-Etikett zu deaktivieren, die EAS-Deaktivierungsdaten zu sammeln, die zweite Daten betreffend Deaktivierung des mindestens einen EAS-Tags sind, und die ersten und zweiten Daten zu übertragen;
die Alarmverwaltungseinheit (14) konfiguriert ist, um die ersten und zweiten Daten zu empfangen, zu verarbeiten und zu verteilen; und
die Datenverarbeitungseinheit (18; 14) konfiguriert ist, um die ersten und zweiten Daten zu empfangen, die Datenverarbeitungseinheit ebenso konfiguriert ist, um die ersten und zweiten Daten zu analysieren und dritte Daten betreffend die ersten und zweiten Daten zu erzeugen.

7. System gemäß Anspruch 6, wobei die Datenverarbeitungseinheit (18; 14) angeordnet ist, um die ersten Daten mit den zweiten Daten zu korrelieren, um Effektivität von Angestellten und/oder Effektivität von Anlagen und/oder Platzierung von EAS-Etiketten und/oder Funktionalität von EAS-Etiketten zu bestimmen.

8. System gemäß Anspruch 6 oder 7, wobei die Datenverarbeitungseinheit (18; 14) derart angeordnet ist, dass die dritten Daten mit den ersten und zweiten Daten korrelieren, um zu verifizieren, dass eine vorbestimmte Anzahl von Deaktivierungen aufgetreten ist.

9. System gemäß Anspruch 6 oder 7, wobei die Datenverarbeitungseinheit (18; 14) derart angeordnet ist, dass die dritten Daten mit den ersten und zweiten Daten korrelieren, um die Effektivität eines Benutzers an der POS-Station (6) zu bestimmen.

10. System gemäß Anspruch 6 oder 7, wobei die Datenverarbeitungseinheit (18; 14) derart angeordnet ist, dass die dritten Daten mit den ersten und zweiten Daten korrelieren, um die Betriebsfähigkeit des mindestens einen EAS-Etiketts zu bestimmen.

11. System gemäß einem der Ansprüche 6 bis 10, wobei die ersten Daten Identifizieren von Informationen bezüglich eines Kassierers, der POS-Station (6), des Benutzers an der POS-Station und der erworbenen Ware beinhalten.

12. System gemäß einem der Ansprüche 6 bis 11, wobei die Datenverarbeitungseinheit (18; 14) derart angeordnet ist, dass die dritten Daten mit den ersten und zweiten Daten korrelieren, um die Möglichkeit internen Diebstahls zu bestimmen.

13. System gemäß einem der Ansprüche 6 bis 11, wobei die Datenverarbeitungseinheit (18; 14) derart angeordnet ist, dass die dritten Daten mit den ersten und zweiten Daten korrelieren, um Etikettierungsübereinstimmung zu bestimmen.

14. System gemäß einem der Ansprüche 6 bis 13, wobei die zweiten Daten Informationen bezüglich der Anzahl aufgetretener Deaktivierungen beinhalten.

15. System gemäß einem der Ansprüche 6 bis 11, wobei die Datenverarbeitungseinheit (18; 14) derart angeordnet ist, dass die dritten Daten mit den ersten und zweiten Daten korrelieren, um eine Diagnose einer Integrität der EAS-Deaktivierungseinrichtung (10) herzuleiten.

## Revendications

1. Procédé d'intégration d'information concernant des transactions dans un point de vente (POS) et des désactivations d'élément de surveillance d'articles électroniques (EAS), ce procédé comprenant des étapes consistant à :
générer (300) des données de POS au moyen d'un poste de POS (6),
transmettre (302) des signaux de désactivation provenant du poste de POS (6) à un dispositif de désactivation de EAS (10),
générer (304) des données de désactivation de EAS au moyen du dispositif de désactivation de EAS (10),
transmettre (306) les données de désactivation de EAS et les données de POS à une unité de gestion d'alarme (14), et
mettre en corrélation (308) les données de désactivation de EAS avec les données de POS pour déterminer l'efficacité d'un système comprenant le poste de POS et le dispositif de désactivation de EAS (10).

2. Procédé conforme à la revendication 1, comprenant en outre une étape consistant à générer des données additionnelles au niveau de l'unité de gestion d'alarme (14) et à combiner ces données additionnelles avec les données de POS et les données de désactivation de EAS au niveau de l'unité de gestion d'alarme (14).

3. Procédé conforme à la revendication 1 ou à la revendication 2, selon lequel l'étape de mise en corrélation des données avec les données additionnelles détermine l'efficacité d'employés et/ou l'efficacité d'équipements et/ou la situation d'étiquettes de EAS et/ou la fonctionnalité d'étiquettes de EAS.

4. Système permettant d'intégrer une information concernant des transactions dans un point de vente (POS) et des désactivations d'éléments de surveillance d'articles électroniques EAS, ce système comprenant :
un poste de POS (6) réalisé pour générer des données de POS,
un dispositif de désactivation de EAS (10) susceptible de recevoir des signaux de désactivation provenant du poste de POS (6) et de générer des données de désactivation de EAS,
une unité de gestion d'alarme (14) réalisée pour recevoir les données de désactivation de EAS et les données de POS,
une unité de traitement de données (18, 14) réalisée pour mettre en corrélation les données de POS et les données de désactivation de EAS pour déterminer l'efficacité d'un système comprenant le poste de POS et
le dispositif de désactivation de EAS (10).

5. Système conforme à la revendication 4, dans lequel l'unité de gestion d'alarme (14) génère des données additionnelles et combine ces données additionnelles avec les données de POS et les données de désactivation de EAS au niveau de l'unité de gestion d'alarme.

6. Système conforme à la revendication 4 ou 5, dans lequel :
le poste de POS (6) est conformé pour recueillir et transmettre les données de POS, les données de POS étant des premières données concernant une marchandise achetée et comprenant des données concernant la désactivation de EAS,
le dispositif de désactivation de EAS (10) est conformé pour recevoir un signal de désactivation ou une condition de défaut à partir du poste de POS, le dispositif de désactivation de EAS étant également conformé pour permettre de désactiver au moins une étiquette de EAS, de recueillir les données de désactivation de EAS qui correspondent à des secondes données concernant la désactivation de l'étiquette de EAS, et de transmettre les premières et les secondes données,
l'unité de gestion d'alarme (14) est conformée pour recevoir, traiter et remettre les premières et les secondes données, et
l'unité de traitement de données (18, 14) est conformée pour recevoir et traiter les premières et les secondes données, l'unité de traitement de données étant également conformée pour analyser les premières et les secondes données et générer des troisièmes données relatives aux premières et aux secondes données.

7. Système conforme à la revendication 6, dans lequel l'unité de traitement de données (18, 14) est réalisée pour mettre en corrélation les premières données avec les secondes données de façon à déterminer l'efficacité d'employés et/ou l'efficacité d'équipements et/ou la situation d'étiquettes de EAS et/ou la fonctionnalité d'étiquettes de EAS.

8. Système conforme à la revendication 6 ou à la revendication 7, dans lequel l'unité de traitement de données (18, 14) est réalisée de sorte que les troisièmes données mettent en corrélation les premières et les secondes données pour vérifier qu'un nombre prédéfini de désactivations s'est produit.

9. Système conforme à la revendication 6 ou à la revendication 7, dans lequel l'unité de traitement de données (18, 14) est réalisée de sorte que les troisièmes données mettent en corrélation les premières et les secondes données pour déterminer l'efficacité d'un utilisateur au niveau du poste de POS (6).

10. Système conforme à la revendication 6 ou à la revendication 7, dans lequel l'unité de traitement de données (18, 14) est réalisée de sorte que les troisièmes données mettent en corrélation les premières et les secondes données pour déterminer le caractère opérationnel d'au moins une étiquette de EAS.

11. Système conforme à l'une quelconque des revendications 6 à 10, dans lequel les premières données comprennent une information d'identification concernant un caissier, le poste de POS (6), l'utilisateur situé au poste de POS et la marchandise achetée.

12. Système conforme à l'une quelconque des revendications 6 à 11, dans lequel l'unité de traitement de données (18, 14) est réalisée de sorte que les troisièmes données mettent en corrélation les premières et les secondes données pour déterminer la possibilité de vol interne.

13. Système conforme à l'une quelconque des revendications 6 à 11, dans lequel l'unité de traitement de données (18, 14) est réalisé de sorte que les troisièmes données mettent en corrélation les premières et les secondes données pour déterminer la conformité de l'étiquetage.

14. Système conforme à l'une quelconque des revendications 6 à 13, dans lequel les secondes données comprennent une information relative au nombre de désactivations qui se sont produites.

15. Système conforme à l'une quelconque des revendications 6 à 11, dans lequel l'unité de traitement de données (18, 14) est réalisée de sorte que les troisièmes données mettent en corrélation les premières et les secondes données pour en déduire un diagnostic de l'intégrité du désactivateur de EAS (10).
